Europäisches Patentamt

European Patent Office

Office européen des brevets

(11) Publication number: **0 323 660**
**A1**

# (12) EUROPEAN PATENT APPLICATION

(21) Application number: 88202813.7

(22) Date of filing: 08.12.88

(51) Int. Cl.⁴: **B29C 67/14** , **B32B 15/08** , **B32B 31/20** , **B64C 1/00**

(30) Priority: 31.12.87 NL 8703165

(43) Date of publication of application:
12.07.89 Bulletin 89/28

(84) Designated Contracting States:
AT BE CH DE ES FR GB GR IT LI LU NL SE

(71) Applicant: AKZO N.V.
Velperweg 76
NL-6824 BM Arnhem(NL)

(72) Inventor: Vogelesang, Laurens Boudewijn
Chopinplein 7
NL-2421 TT Nieuwkoop(NL)
Inventor: Smulders, Fridolin Elizabert
Henricus Marie
van der Mastenstraat 3
NL-2611 NX Delft(NL)
Inventor: Chen, Dong
van Hasseltlaan 413
NL-2625 JB Delft(NL)

(74) Representative: Sieders, René et al
AKZO N.V. Patent Department (Dept. CO)
P.O. Box 9300
NL-6800 SB Arnhem(NL)

(54) Process for manufacturing a laminate of metal sheets and filaments-reinforced synthetic layers.

(57) Fatigue-resistant laminate, suitable for use as constructional material, e.g., in aviation or cosmonautics, particularly in the construction of fuselage or conduits. It comprises two or more metal plates firmly interbonded by an intermediate resinous layer reinforced with continuous strands, a substantial proportion of which extends mutually parallel in at least one direction. Prestressing of said laminate can be readily effected by rolling it to such an extent that it is permanently elongated (by 0.01-8%).

Fig.4

EP 0 323 660 A1

# Fig. 2

## Process for manufacturing a laminate of metal sheets and filaments-reinforced synthetic layers

The invention relates to a process for manufacturing a laminate of at least two metal sheets, between which there is provided a continuous filaments-containing synthetic layer bonded to the metal sheets, a large number of filaments being disposed in parallel lines in at least one direction.

Such a process is known from European Patent Specification EP 0 056 288. It is proposed in this Specification that, following the bonding together of the metal sheets and the filaments-containing synthetic layers, an external force is applied such that to the entire laminate an elongation is imparted which is greater than the elastic elongation of the metal sheets and smaller than the elongation at rupture of the filaments and of the metal sheets, such that the metal sheets are subject to plastic deformation during application of the external tensile force, as a result of which the laminate in its entirety will of course be permanently elongated. Such pre-stressing of the laminate using an external tensile force is carried out in a known manner, preferably so that in the completed and externally virtually entirely unloaded laminate there is an internal compressive stress in the metal sheets in the pre-stress direction and a tensile stress in the continuous filaments. In this known process said pre-stressing is carried out using a vertical drawing machine. The laminate to be treated, which may for instance be in the form of a sheet of 3000 x 1500 x 1,5 mm, should first be provided with reinforcing strips at the two ends to be clamped. In an appropriate and careful manner the sheet fitted with reinforcing strips should next be vertically clamped at its lower and upper edges in the clamping jaws of the vertical drawing machine, optionally with the aid of bolts through specially drilled holes. After this the desired pre-stress may be imparted to the laminate by the application to it of a high external tensile force. After removal of the external load the clamps can be loosened and the pre-stressed sheet is taken out of the drawing machine. Subsequently, the sheet ends fitted with reinforcing strips must be cut off. Although flat laminates of favourable quality may be obtained in this known manner of pre-stressing, said process has several drawbacks. In particular, said fastening of the reinforcing strips and clamping of the comparatively large and thin flat laminates in a vertical drawing machine are quite labour intensive. Moreover, the pre-stressing on the drawing machine can be carried out only by highly skilled people. Furthermore, the strips cut off from the clamped sheets form a substantial waste of relatively costly laminate material. Another drawback to said well-known process is that the dimensions of the sheets are limited by the inevitably finite height and width dimensions of the required drawing machine. The existing drawing machines are too small to accommodate large flat laminates. Sufficiently large tensile testers would have to be newly developed.

The invention has for its object to provide a process of the type mentioned in the opening paragraph, in which the aforementioned drawbacks are overcome. The process is characterized according to the invention in that after the bonding together of the various layers the laminate is flat-rolled under pressure, which may be carried out in a simple manner by passing the laminate between a set of cooperating, pressure loaded planishing rolls, in which process there is imparted to the laminate in its entirety a permanent specific elongation in the range of 0,01 to 8%, more particularly 0,05 to 3,5% in the direction of rolling, and in that the flat-rolling is preferably carried out in the longitudinal direction of the continuous filaments.

Surprisingly, it has been found according to the invention that during the flat-rolling process a permanent elongation is imparted to the laminate in its entirety simultaneously both in the direction of rolling and transverse to the direction of rolling. In other words, according to the invention the laminate is stretched bi-axially even when it is rolled in one direction only.

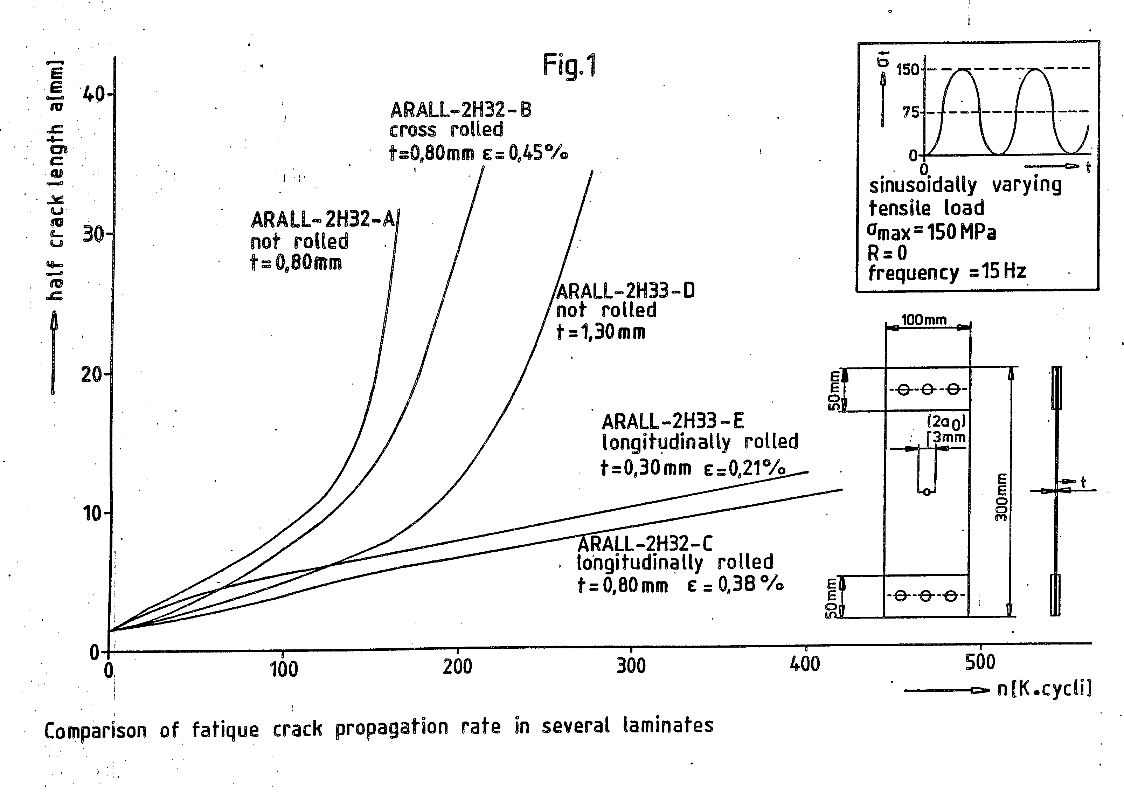

Although the flat-rolling is preferably carried out in the longitudinal direction of the continuous filaments, it has surprisingly been found that a considerable improvement of the fatigue properties of the laminate is also achieved when the laminate is rolled in the direction transverse to the longitudinal direction of the filaments (see Fig. 1, line ARALL®-2H32-B) and all filaments are disposed parallel to each other in one and the same direction only. Of course, there may also be manufactured according to the invention a laminate in which between the metal sheets always a prepreg is provided composed of groups of plastics-impregnated filaments which extend in two mutually perpendicular directions. A laminate of the latter type containing groups of parallel continuous filaments in two mutually perpendicular directions may then be flat-rolled according to the invention, either in the direction of only one of the two groups of filaments, or in the direction of each of the two filament groups. The process may with advantage also be characterized according to the invention in that the flat-rolling of the laminate is carried out two or more times in the same direction, in other words, one and the same sheet can be flat-rolled several times in succession. Moreover, flat-rolling of the laminate may be carried out according to the invention in a direction making a sharp angle, for instance of 45°, with the longitudinal direction of one or more groups of parallel continuous filaments.

The flat-rolling process is carried out according to the invention in such a way that throughout the completed and substantially flat laminate and in a plane parallel to the interfaces of metal and synthetic material, there prevails virtually the same internal state of stress. A preferred embodiment is characterized according to the invention in that in the completed substantially flat and externally entirely unloaded laminate there prevails an internal compressive stress in the direction of rolling in the range of 0-200 MPa in the metal sheets and an internal tensile stress in the range of 0-500 MPa in the continuous filaments. In this way according to the invention such an elongation is imparted to the laminate in its entirety by flat-rolling as is greater than the elastic elongation of the metal sheets and without the filaments or the metal sheets being fractured, the metal sheets being subject to plastic deformation during rolling. In rolling the laminate use is made with advantage according to the invention of a rolling mill by which at least a section is rolled having a width equal to the total distance between the side edges of the sheet measured transverse to the longitudinal direction of the sheet.

In the process according to the invention virtually endless flat laminates may in principle be fed in a simple manner to a rolling mill. The rolling mill may be of the type known in itself which is used on a large scale in the metal industry for rolling solid metal sheets, which are mostly rolled to a sheet thickness several times smaller than the original sheet thickness. Such a known rolling mill essentially consists of two cylindrical rotating rolls, the sheet material to be treated being passed through a slit between these two rolls by which a high force is exerted on the sheet to be rolled in order to bring about the desired decrease of thickness. The pre-stressing of the flat laminates by flat-rolling according to the invention is not very labour-intensive and may wholly or partially be automated in a fairly simple manner. Since the entire surface area of the flat laminate can be rolled, no scrap is formed at all, so that there will be no loss of costly laminate.

Also, a rectangular flat laminate containing continuous filaments extending in the transverse direction of the sheet may according to the invention be rolled in a simple manner in the longitudinal direction of the filaments extending in the transverse direction of the sheet. In this process the laminate is rolled in two or more adjoining sections, the total width of all the rolled sections being at least equal to the total distance between the side edges of the flat laminate transverse to the direction of rolling. In this manner for instance a rectangular sheet of, say, 6000 x 1500 x 1,5 mm containing continuous filaments disposed parallel to the transverse direction of the sheet, may be pre-stressed by flat-rolling according to the invention. Using a pair of rolls, of which the axial length is 200 mm, the entire sheet is rolled by passing the pair of rolls over the sheet in thirty connecting parallel sections of a width of 200 mm each, or conversely. Optionally, the adjoining rolled sections may partially overlap in this process.

A preferred embodiment of the process is characterized according to the invention in that continuous filaments are employed of which the elongation at rupture is 0,5 to 8% and the modulus of elasticity is 60 to 450 GPa. According to the invention use is made with advantage of continuous filaments having a diameter of 5-25 μm, more particularly 8-12 μm, which are of a material selected from the following group of materials: aramids, more particularly poly-paraphenylene terephthalamide (PPDT), glass, more particularly E-glass, R-glass, or S₂-glass, and carbon. It is preferred that use be made according to the invention of continuous filaments, of which the modulus of elasticity is at least 50 GPa.

According to the invention use is made of a metal of which the tensile strength is at least 0,20 GPa and which is selected from the following group of materials: aluminium, aluminium alloys, more particularly aluminium-copper alloys, such as those of the AA(USA) No. 2024 type or aluminium-zinc alloys, such as those of the AA(USA) No. 7075 type, steel, titanium alloys, and copper. Use is made with advantage according to the invention of metal sheets having a thickness smaller than 1,5 mm, more particularly 0,1-0,8 mm, and of 2 to 20 metal sheets, a continuous filaments-containing synthetic layer being provided between every two successive metal sheets.

It is preferred that the process according to the invention should be carried out so that a large number of continuous filaments are arranged parallel to each other in at least one direction and essentially linear, such an amount of filaments being arranged in the synthetic layer that they constitute 35-75% by volume, more particularly 40-65% by volume, of the total volume of synthetic material and filaments combined.

According to the invention use is made of a synthetic layer which is of a non-thermoplastic synthetic material, such as epoxy resin, unsaturated polyester resin, vinyl esters, or phenol resins. Depending on the desired properties of the laminate, use may be made according to the invention of a synthetic layer of a thermoplastic synthetic material. In particular use may be made according to the invention of substantially amorphous thermoplastic synthetic materials, preferably having a glass transition temperature above 80°C, more particularly above 140°C or 160°C, such as polyarylate (PAR), polysulphone (PSO), polyethersulphone (PES), polyetherimide (PEI), or polyphenylene ether (PPE), more particularly poly-2,6 dimethyl phenylene ether.

Alternatively, the synthetic material may according to the invention advantageously consist of a semi-crystalline thermoplastic synthetic material. Further, according to the invention use may be made of a semi-crystalline or para-crystalline thermoplastic synthetic material having a crystalline melting point above 130°C, preferably above 270°C, such as polyphenylene sulphide (PPS), polyether ketones, more particularly polyether-ether ketone (PEEK), polyether ketone (PEK), and polyether ketone-ketone (PEKK), liquid crystal polymers, such as XYDAR of Dartco composed of the monomers bisphenol, terephthalic acid, and hydroxybenzoic acid.

The invention also comprises a process characterized in that a laminate is flat-rolled which is composed of a central metal core sheet of a gradually changing thickness, to either side of which there is bonded a covering laminate of constant thickness composed of at least two metal sheets, between which there is provided a continuous filaments-containing synthetic layer bonded to the metal sheets, the minimum thickness of the core sheet being at least equal to the thickness of each of the metal sheets of the covering laminate.

The invention also comprises a laminate manufactured in accordance with the process described. The invention further comprises a cylindrical structure, such as the fuselage of a spacecraft or aircraft or a pipeline, built up of a number of rectangular skin sheets, characterized in that lengthwise the skin sheets in the form of a laminate extend virtually in the longitudinal direction of the cylindrical structure and the continuous filaments are disposed parallel to the transverse direction of the sheets.

The laminates manufactured using the process according to the invention may be of the type indicated in Fig. 1, 2, 3, or 4 of EP 0 056 288-B$_1$. It should be noted that in EP 0 034 781-B$_1$ a process is described for manufacturing a laminate of two aluminium foils covering an inner layer of a thermoplastic synthetic material, optionally filled with small aluminium needles. It is proposed in said Patent Specification that the laminate should be composed of a thermoplastic sheet subjected to cold deformation by rolling prior to being shaped. In the process described in EP 0 034 781-B$_1$ the complete laminate composed of three layers (aluminium-synthetic material-aluminium) bonded together is not rolled.

In addition, reference is made to the article in FOCUS-1987/3, p. 9, published by Fokker B.V. In the third paragraph on page 9 it is mentioned that the well-known ARALL® laminate for manufacturing structural components may be machined, bent or rolled and adhesively bonded by conventional means. By rolling is meant here section rolling, by which a flat sheet can be rolled into a specially shaped section, such as a section having a U-shaped, S-shaped, or Z-shaped cross-section, which is not practised in the process according to the invention.

To illustrate the effect of pre-stressing the laminates in question by flat-rolling according to the invention, Fig. 1 gives the fatigue behaviour of a number of test specimens. The shape of the test specimens used is drawn in Fig. 1 and shows that use is made of test specimens which prior to the test were provided with a saw cut of $2a_o$- = 3 mm in total length. To this end in Fig. 1 the half lengths of the crack in mm are plotted on the ordinate. On the abscissa is plotted the total number of kilo cycles of the used sinusoidally varying tensile fatigue load at constant amplitude. The frequency of the varying load was 15 Hertz. The frequency varied from a maximum tensile stress $\sigma_{max}$ = 150 MPa to a minimum tensile stress $\sigma_{min}$ = 0. The fatigue load used is therefore of the type R = $\frac{\sigma_{min}}{\sigma_{max}}$ = 0. The several lines drawn in Fig. 1 relate to two slightly different materials, viz. ARALL®-2H32 and ARALL®-2H33, which were treated in different ways. All laminates tested were made of the ARALL® material, which contains at least continuous filaments of aramid, i.e. in this case poly-paraphenylene terephthalamide (PPDT), impregnated with a synthetic material based on epoxy resin, which filaments are provided between two sheets of an aluminium alloy to form a laminate. For the ARALL-2H32 laminate type the first numeral 2 means that the metal sheets are of aluminium-copper alloy of the AA(USA) No. 2024-T$_3$ type (in the starting state of the metal sheets prior to the formation of the laminate). The capital H means that use was made of continuous PPDT filaments having a diameter of 12 um and a high modulus of elasticity of a magnitude of 130 GPa. The numeral 3 refers to the use of aluminium sheets of a thickness of 0,3 mm. The final numeral 2 means that the laminate is composed of two aluminium sheets in all, with between them a prepreg of a large number of parallel rectilinear, i.e. unidirectional, PPDT filaments impregnated with a synthetic material based on epoxy resin. Said prepreg is 0,2 mm thick and the complete laminate of the ARALL®-2H32 type has a total thickness of 0,8 mm. The other laminate type indicated in Fig. 1, ARALL®-2H33, differs from the 2H32 type only in that in 2H33 there are provided three aluminium sheets of a thickness of 0,3 mm, with a prepreg between every two aluminium sheets. The total thickness of the ARALL®-2H33 laminate consisting of three metal sheets and two prepregs is 1,3 mm. In the two ARALL®-2H32 and 2H33 laminate types the prepreg is composed of 50% by volume of continuous filaments and 50% by volume of synthetic material based on epoxy resin.

The ARALL® laminates were made by placing the metal sheets one upon the other, with interposition of said prepreg(s). The resulting package of loose parallel parts, viz. metal sheets with prepreg(s) in between, was fixed. Subsequently, the package was compressed by subjecting it to heat and pressure and next the thermosetting synthetic material based on epoxy resin was cured at the desired temperature. Before being assembled with the prepreg, the metal sheets must, of course, be subjected to some appropriate pre-treatments, such as alkaline degreasing, etching in a chromic-sulphuric acid bath, anodizing in chromic or sulphuric acid, applying a primer appropriate to the type of synthetic material used and having corrosion inhibiting properties or the like.

In Fig. 1 are drawn, generally from left to right, three lines which relate to fatigue tests with said ARALL®-2H32 laminate. The line on the far left, ARALL®-2H32-A, relates to a laminate not manufactured according to the invention, which, following the bonding together of the different layers, was not subjected to post-treatment in the form of pre-stressing by flat-rolling or in any other way. The line next to it, ARALL®-2H32-B, relates to a laminate that, following the bonding together of the various layers, was rolled according to the invention, i.e. in the direction transverse to the longitudinal direction of the continuous filaments of the prepreg. For this cross rolling the slit between the two cylindrical rolls was adjusted so that the laminate was depressed by the rolls. The width of the slit between the rolls was set to a value such as was to result in a permanent specific elongation of 0,45% being imparted to the laminate in the direction of rolling. The line on the far right, ARALL®-2H32-C, relates to a laminate which also was rolled according to the invention, but in the longitudinal direction of the continuous filaments in the prepreg, which in Fig. 1 is referred to as longitudinal rolling. For this last-mentioned laminate the rolls were so set that a permanent elongation of 0,38% was imparted to the laminate in the direction of rolling. Fig. 1 clearly shows that the ARALL®-2H32-B and ARALL®-2H32-C rolled laminates according to the invention display a smaller and very small crack growth, respectively, under the influence of said varying load than does the ARALL®-2H32-A laminate, which was not manufactured according to the invention, and therefore not rolled.

It appears in particular from Fig. 1 that at about 160 000 load variations the ARALL®-2H32-A material displays a generally inadmissably large crack length and a very strong increase in the crack propagation rate $\frac{da}{dn}$ Particularly surprising from the ARALL®-2H32-B curve is that even cross rolling, i.e. rolling in the direction transverse to the longitudinal direction of the filaments which are disposed in parallel lines in one direction only, will lead to a clear improvement of the fatigue properties.

Also in Fig. 1 are two lines which relate to fatigue tests on said ARALL®-2H33 laminate. The ARALL®-2H33-D line relates to a laminate not manufactured according to the invention, which, following the bonding together of the various layers, was not subjected to post-treatment in the form of pre-stressing by flat-rolling or in any other way. The line next to it, ARALL®-2H33-E, relates to a laminate that, following the bonding together of the various layers, was rolled according to the invention in the longitudinal direction of the continuous filaments in the two prepregs. Rolling was carried out in such a way that it was found that between the initial situation prior to rolling (laminate length = 1) and the post-rolling situation (laminate length = 1 + Δ1) there had been imparted to the laminate in its entirety a permanent specific elongation $\epsilon = 0,21\%$ $(= \frac{\Delta 1}{1}$ x 100%). Fig. 1 clearly shows that the rolled ARALL®-2H33-E laminate according to the invention displays a much smaller crack propagation rate under the influence of said varying load than does the ARALL®-2H33-D laminate, which had not been manufactured according to the invention and had therefore not been rolled. It appears in particular from Fig. 1 that upon being subjected to about 280 000 load variations the ARALL®-2H33-D material displays a generally inadmissably large crack length and a very strong increase in the crack propagation rate.

To further illustrate the effect of the process according to the invention the internal stresses were determined of the test specimens 1, 2, 3 and 4 listed in the table below.

Table

| Test specimen no. | Roll depression mm | Permanent specific elongation % in direction of rolling | Internal stress in aluminium sheets MPa | Internal stress in PPDT filaments MPa |
|---|---|---|---|---|
| 1 not according to invention | 0 | 0 | + 58,3 | - 79,5 |
| 2 according to invention | 0,15 | 0,11 | + 28,8 | - 39,3 |
| 3 according to invention | 0,17 | 0,39 | - 76,3 | ± 104,0 |
| 4 according to invention | 0,20 | 0,67 | -139,6 | + 190,4 |

+ = tensile stress
- = compressive stress

EP 0 323 660 A1

The table shows that in the test specimen 1 which had not been manufactured according to the invention there prevails the most unfavourable internal state of stress, viz. a relatively high tensile stress in the metal sheets and a relatively high compressive stress in the PPDT filaments, which is less desirable for use in some structures. The test specimens 2, 3 and 4 were manufactured according to the invention, with the depression by the rolls increasing with increasing specific elongation and the rolling being carried out in the longitudinal direction of the continuous filaments. Prior to rolling the width of the slit between the rolls was set to a value of the order of the initial thickness of the laminate less the roll depression given in the table. The table shows that in the test specimen 2, which had been least intensively rolled according to the invention, there still prevails a clearly more favourable state of internal stress than in test specimen 1, viz. a value for the compressive stress in the PPDT filaments which is about half that of test specimen 1. The test specimens 3 and 4, which had been more intensively rolled according to the invention, display an even more favourable state of internal stress, viz. a compressive stress in the metal sheets and tensile stress in the PPDT filaments. All of the 4 test specimens listed in the table are of the aforementioned ARALL®-2H32 laminate with a prepreg of unidirectional continuous PPDT filaments constituting 50% by volume in a synthetic material based on epoxy resin.

The internal stresses mentioned in the table relate to the situation in which the laminate in its entirety is unloaded. To determine said internal stresses one of the two outer aluminium sheets of the laminate was removed by etching, so that the remaining laminate became warped. From the warp of the partially dismantled laminate the internal stresses in the complete (unwarped) flat laminate were derived that are given in the table.

The test specimens 1 through 4 mentioned in the table each had a width of 30 mm and a length of 300 mm. In all the tests mentioned here the rolled test specimens manufactured according to the invention were made of rolled strips of laminate of 100 mm in width.

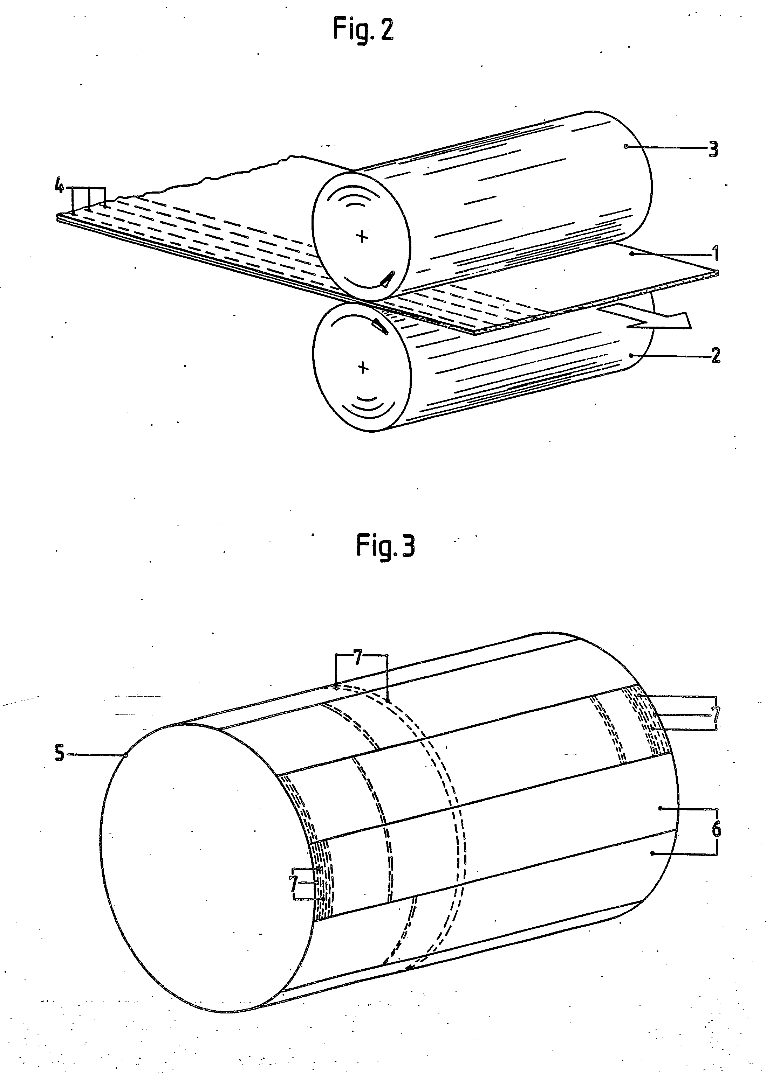

Fig. 2 is a very schematic view of an apparatus for carrying out the process according to the invention. In Fig. 2 a laminate 1 in the shape of a flat sheet is passed in the direction of the arrow between the two cooperating rotating cylindrical rolls 2 and 3. The width of the slit between the rolls 2 and 3 is smaller than the thickness of the non-rolled sheet 1. As a result, a permanent elongation is imparted to the laminate 1 by the pressure-loaded, cooperating rolls. Rolling is carried out in the longitudinal direction of the continuous filaments 4, schematically indicated with dash lines. If a flat laminate of 6000 x 1000 mm with continuous filaments in the longitudinal direction of the sheet is to be treated in the device according to Fig. 1, the cylindrical planishing rolls 2 and 3 should have an axial length of over 1000 mm. The planishing rolls 2 and 3 need of course be set in the usual manner in a framework (not drawn) and such other provisions need be made as are known in themselves and are required in the flat-rolling process, for instance for driving, guiding, operating and the like.

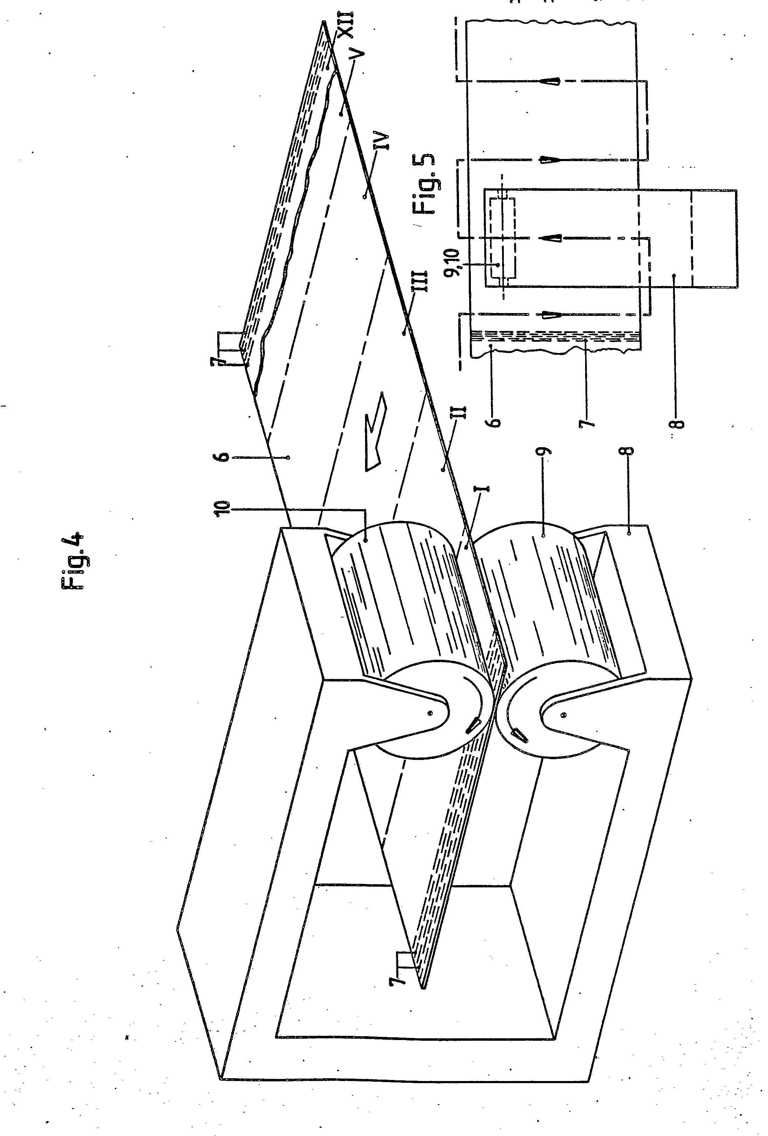

Fig. 3 is a very schematic view of part of a fuselage 5 of an aircraft. The fuselage 5 is for a significant part made up of rectangular skin sheets 6 of, say, 6000 x 1500 x 0,8 mm, which lengthwise extend in the longitudinal direction of the cylindrical fuselage and which are composed of the flat laminate according to the invention, and in which the unidirectional continuous filaments 7, which may for instance be of PPDT, extend parallel to the transverse direction of the skin sheets 6. When such long sheets 6 are to be flat-rolled in their transverse direction, i.e. in the longitudinal direction of the filaments 7, such a process may be carried out according to the invention in a particularly efficient and economic manner by using the rolling mill schematically shown in Fig. 4. The rolling mill according to Fig. 4 is essentially composed of a more or less U-shaped frame 8, in which are placed two cooperating, pressure loaded, revolving planishing rolls 9 and 10. The skin sheet 6 with filaments 7, which is to be rolled in transverse direction, is between the planishing rolls 9 and 10, the axial length of which is, for instance, 500 mm and hence much smaller than the length of 6000 mm of the sheet 6 to be rolled. The sheet 6 may be rolled in its entirety in the apparatus according to Fig. 4 by passing twelve contiguous sections I through XII between the cooperating, pressure loaded planishing rolls 9 and 10. In the relatively simple rolling mill according to Fig. 4 it is also possible to roll very long flat laminates in transverse direction. Rolling the contiguous sections I through XII of the sheet may in principle also be realized by numerical control. The rolling mill according to Fig. 4 should of course also comprise various provisions known in themselves, such as driving, guiding, and operating devices and the like. For further illustration Fig. 5 shows in plan view how a very long sheet may be rolled in transverse direction.

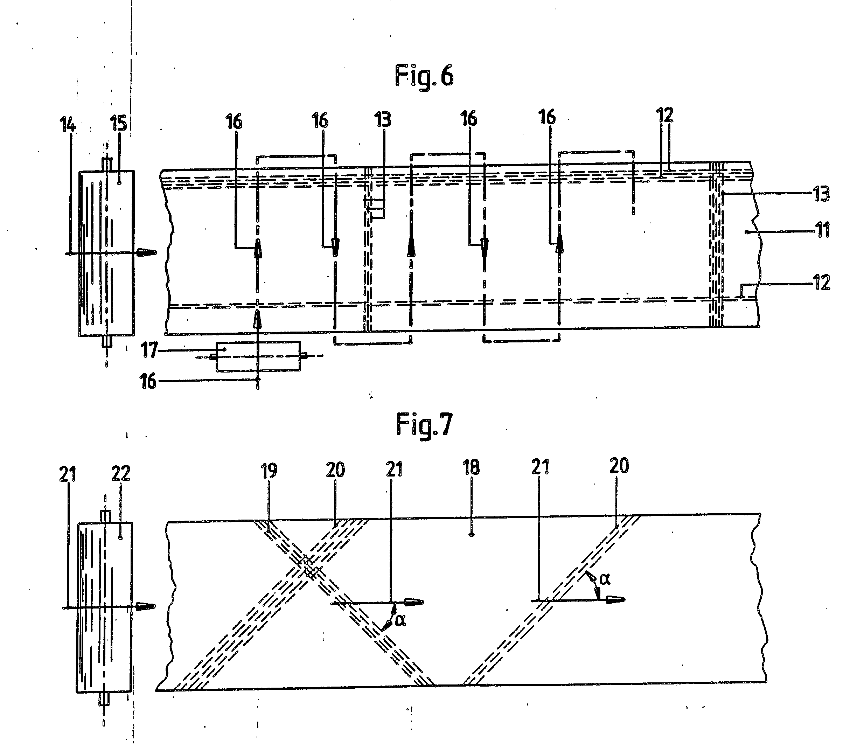

Fig. 6 depicts the flat-rolling of a laminate sheet 11 according to the invention, said laminate containing large numbers of continuous filaments 12 and 13 which extend in two mutually perpendicular directions, viz. in the longitudinal and transverse direction, respectively, of the sheet 11. In the rolling mill 15 such a laminate 11 is first rolled in the direction indicated with the arrow 14, i.e. in the longitudinal direction of the sheet and of the continuous filaments 12. Next, the laminate 11 is cross rolled in the rolling mill 17 in the direction indicated with the arrows 16, i.e. in the longitudinal direction of the continuous filaments 13. Said cross rolling is carried out across a number of successive contiguous sections.

Fig. 7 is another schematic view of the use of the flat-rolling process according to the invention on a laminate 18 containing two groups of continuous filaments 19 and 20. Each group of filaments consists of a very large number of parallel filaments. The two filament groups 19 and 20 cross at right angles and both make a sharp angle $\alpha$ of about 45° in different directions with the longitudinal direction 21 (indicated with arrow) of the laminate 18. The laminate 18 is also rolled in the longitudinal direction 21 in the rolling mill 22. Flat-rolling in the process indicated in Fig. 7 is therefore carried out in a direction of rolling 21, which makes a sharp angle with the longitudinal direction of the filaments in each of the two filament groups.

As regards the properties of several of the continuous reinforcing filaments that may be used in manufacturing laminates according to the invention, reference is made to the article by Kh. Hillermeier and H.G. Weyland: "An aramid yarn for reinforcing plastics", Plastica, November 1977, No. 11, pp. 374-380. Filaments of $S_2$-glass have substantially the same properties and composition as filaments of S-glass. The properties and composition of E-glass, R-glass and S- or $S_2$-glass are given in the table on p. 29 of K.L. Loewenstein's The Manufacturing Technology of continuous glass fibres, Elsevier Scientific Publishing Company, 1973 and in Table 1 on p. 33 of K.A.F. Schmidt's Textilglas fur die Kunststoffverstarkung, Zechner & Huthig Verlag GmbH Speyer, 1972.

The terms modulus of elasticity and tensile strength of the glass filaments used in the description invariably refer to the virgin value at tensile load in the longitudinal direction of the filament and measured on a single filament containing no adhesives, i.e., a virgin filament, the measurements being carried out in accordance with ASTM No. D3379-75.

The aforementioned glass transition point $T_g$ of said substantially amorphous thermoplastic synthetic materials should be determined employing a dynamic mechanical measuring device of the RDA-700 type of the make Rheometrics, using a frequency of 1 Hertz and a heating rate of 2° C/min. at most. $T_g$ is the temperature at which there is a maximum damping modulus $G''$. The aforementioned crystalline melting point $T_m$ of the semi-crystalline thermoplastic synthetic materials is determined by Differential Scanning Calorimetry (DSC). This determination is carried out with the DSC-7 type measuring apparatus of Perkin Elmer at a heating rate of 20° C/min. $T_m$ is defined as the peak maximum of the endo-thermical peak in the DSC curve.

Within the scope of the invention various changes may be made. Although in the laminates according to the invention it is preferred that use be made of metal sheets having the same thickness, it is in principle also possible for one and the same laminate to contain metal sheets which have two or more thicknesses and are arranged symmetrical or not. According to the invention the flat-rolling process is carried out at room temperature, no additional heat being used.

Optionally, the synthetic layer may contain some conventional additives such as fillers. The continuous reinforcing threads or filaments in the synthetic layers may extend parallel to each other in one direction, i.e., they may be arranged unidirectional. Alternatively, there may be applied two groups of reinforcing filaments. Each group will then comprise a very large number of parallel filaments, the threads or filaments of the one group extending at right angles to the filaments of the other group. Such an arrangement may for instance be realized by providing the filaments of the two groups in the form of a fabric or a deposition or web.

## Claims

1. A process for manufacturing a laminate of at least two metal sheets, between which there is provided a continuous filaments-containing synthetic layer bonded to the metal sheets, a large number of filaments being disposed parallel in at least one direction, characterized in that after the bonding together of the various layers the laminate is flat-rolled under pressure, in which a permanent specific elongation is imparted to the laminate in its entirety.

2. A process according to claim 1, characterized in that the flat-rolling is carried out by passing the laminate between a set of cooperating, pressure loaded planishing rolls.

3. A process according to claim 1, characterized in that during the flat-rolling process there is imparted to the laminate in its entirety a permanent specific elongation in the range of 0,01 to 8%, more particularly 0,05 to 3,5% in the direction of rolling.

4. A process according to claim 1, characterized in that during the flat-rolling process a permanent elongation is imparted to the laminate in its entirety, simultaneously both in the direction of rolling and transverse to the direction of rolling.

5. A process according to claim 1, characterized in that flat-rolling is carried out in the longitudinal direction of the continuous filaments.

6. A process according to claim 1, in which continuous filaments are disposed parallel to each other in one direction only, characterized in that the flat-rolling of the laminate is carried out in the direction transverse to the longitudinal direction of the continuous filaments.

7. A process according to claim 1, in which a large number of parallel filaments extend in two mutually perpendicular directions of the laminate, characterized in that the flat-rolling is successively carried out in the longitudinal direction of each of the two parallel filament groups.

8. A process according to claim 1, characterized in that flat-rolling of the laminate is carried out two or more times in the same direction.

9. A process according to claim 1, characterized in that the flat-rolling of the laminate is carried out in a direction making a sharp angle, for instance of 45°, with the longitudinal direction of one or more groups of parallel continuous filments.

10. A process according to claim 3, characterized in that the flat-rolling process is carried out in such a way that throughout the completed and substantially flat laminate and in a plane parallel to the interfaces of metal and synthetic material there prevails virtually the same internal state of stress.

11. A process according to claim 3, characterized in that the flat-rolling process is carried out in such a way that in the completed substantially flat and externally entirely unloaded laminate there prevails in the direction of rolling a compressive stress in the metal sheets and a tensile stress in the continuous filaments.

12. A process according to claim 11, characterized in that it is so carried out that in the externally entirely unloaded laminate the compressive stress in the metal sheets is in the range of 0-200 MPa and the tensile stress in the continuous filanents is in the range of 0-500 MPa.

13. A process according to claim 1, characterized in that such an elongation is imparted to the laminate in its entirety by flat-rolling as is greater than the elastic elongation of the metal sheets and without the filaments or the metal sheets being fractured, the metal sheets being subject to plastic deformation during rolling.

14. A process according to claim 5, characterized in that the laminate is rolled in a rolling mill by which at least a section is rolled having a width equal to the total distance between the side edges of the sheet transverse to the longitudinal direction of the continuous filaments and parallel to the interfaces of metal and synthetic material.

15. A process according to claim 5, characterized in that the laminate is rolled in two or more contiguous sections, the total width of all rolled sections being at least equal to the total distance between the side edges of the flat laminate transverse to the direction of rolling.

16. A process according to claim 5, characterized in that a rectangular sheet containing continuous filaments extending in the transverse direction of the sheet is rolled in the longitudinal direction of the filaments.

17. A process according to claim 15, characterized in that the contiguous rolled sections partially overlap.

18. A process according to claim 1, characterized in that continuous filaments are employed of which the elongation at rupture is 0,5 to 8% and the modulus of elasticity is 60 to 450 GPa.

19. A process according to claim 1, characterized in that continuous filaments having a modulus of elasticity of at least 50 GPa are employed, which are of a material selected from the following group of materials: aramid, more particularly poly-paraphenylene terephthalamide (PPDT), glass, more particularly E-glass, R-glass, or $S_2$-glass, and carbon.

20. A process according to claim 1, characterized in that use is made of continuous filaments having a diameter of 5-25 μm, more particularly 8-12 μm.

21. A process according to claim 1, characterized in that use is made of a metal of which the tensile strength is at least 0,20 GPa and which is selected from the following group of materials: aluminium, aluminium alloys, more particularly aluminium-copper alloys, such as those of the AA(USA) No. 2024 type or aluminium-zinc alloys, such as those of the AA(USA) No. 7075 type, steel, titanium alloys, and copper.

22. A process according to claim 1, characterized in that use is made of metal sheets having a thickness smaller than 1,5 mm, more particularly 0,1-0,8 mm, and of 2 to 20 metal sheets, a continuous filaments-containing synthetic layer being provided between every two successive metal sheets.

23. A process according to claim 1, characterized in that use is made of a laminate in which a large number of continuous filaments are arranged parallel to each other in at least one direction and essentially linear.

9

24. A process according to claim 1, characterized in that use is made of a laminate in which such an amount of filaments are arranged in a synthetic layer that they constitute 35-75% by volume, more particularly 40-65% by volume, of the total volume of synthetic material and filaments combined.

25. A process according to claim 1, characterized in that use is made of a laminate having a synthetic layer which is of a non-thermoplastic synthetic material, such as epoxy resin, unsaturated polyester resin, vinyl esters, or phenol resins.

26. A process according to claim 1, characterized in that use is made of a laminate having a synthetic layer which is of a thermoplastic synthetic material.

27. A laminate according to claim 1, characterized in that a laminate is flat-rolled which is composed of a central metal core sheet of a gradually changing thickness to either side of which there is bonded a covering laminate of constant thickness composed of at least two metal sheets, between which there is provided a continuous filaments-containing synthetic layer bonded to the metal sheets, the minimum thickness of the core sheet being at least equal to the thickness of each of the metal sheets of the covering laminate.

28. A laminate, characterized in that it is manufactured by the process according to one or more of the preceding claims.

29. A cylindrical structure, such as the fuselage of a spacecraft or aircraft or a pipeline, built up of a number of rectangular skin sheets, characterized in that the sheets are manufactured according to claim 16 and lengthwise extend virtually in the longitudinal direction of the cylindrical structure.

Fig.1

Comparison of fatigue crack propagation rate in several laminates

# Fig. 2

# Fig. 3

## Fig.4

## Fig.5

EP 0 323 660 A1

Fig.6

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | EP-A-0 056 288 (TECHNISCHE HOGESCHOOL DELFT) ----- | | B 29 C 67/14 <br> B 32 B 15/08 <br> B 32 B 31/20 <br> B 64 C 1/00 |

**TECHNICAL FIELDS SEARCHED (Int. Cl.4)**

B 29 C
B 32 B
B 64 C

The present search report has been drawn up for all claims

| Place of search | Date of completion of the search | Examiner |
|---|---|---|
| THE HAGUE | 05-04-1989 | VAN THIELEN J.B. |